# EUROPÄISCHE PATENTSCHRIFT

(11) **EP 2 753 218 B1**
(45) Veröffentlichungstag und Bekanntmachung des Hinweises auf die Patenterteilung: **24.12.2014**
(21) Anmeldenummer: 12738420.4
(22) Anmeldetag: 05.07.2012
(51) Int. Cl.: A47J 31/40, A47J 31/36

(54) **VERFAHREN UND VORRICHTUNG ZUR HERSTELLUNG EINER KAFFEEZUBEREITUNG**
METHOD AND APPARATUS FOR A COFFEE PREPARATION
MÉTHODE ET DISPOSITIF POUR LA PRÉPARATION DU CAFÉ

(30) Priorität: 06.09.2011 DE 102011053294
(43) Veröffentlichungstag der Anmeldung: 16.07.2014
(73) Patentinhaber: Eugster/Frismag AG, 8580 Amriswil (CH)
(72) Erfinder: FISCHER, Daniel, CH-8590 Romanshorn (CH)
(74) Vertreter: Wagner, Kilian
(86) Internationale Anmeldenummer: PCT/EP2012/063193
(87) Internationale Veröffentlichungsnummer: WO 2013/034334

(56) Entgegenhaltungen:
- EP-A1- 1 615 004
- DE-U1-202008 005 274
- JP-A- 10 211 105
- US-A1- 2002 145 010
- US-A1- 2010 320 225

## Beschreibung

Die Erfindung betrifft ein Verfahren gemäß Anspruch 1 zur, bevorzugt automatisierten, Herstellung eines Kaffees (= Kaffeezubereitung) unter Verwendung einer Zubereitungsvorrichtung, die eine Brüheinheit umfasst oder aus dieser besteht, in der heißes Wasser durch einen Kaffeebohnenpulverportion strömt und das Kaffeepulver, beispielsweise durch ein Sieb als sogenannter Trester zurückgehalten wird. Ferner betrifft die Erfindung eine Kaffeezubereitungsvorrichtung gemäß Anspruch 10 insbesondere zur Durchführung des erfindungsgemäßen Herstellungsverfahrens. Weiterhin führt die Erfindung auf eine Verwendung einer mit Kaffeepulver aus gemahlenen Kaffeebohnen gefüllten Kartusche im Zusammenhang mit der vorgeschlagenen Kaffeezubereitungsvorrichtung.

Bekannt sind sogenannte Kaffeevollautomaten mit einem Kaffeebohnenbehälter, einem Mahlwerk sowie einer Zubereitungseinrichtung, in welcher erhitztes Wasser in einer Brüheinheit durch die zuvor portionsweise gemahlenen Kaffeebohnen zur Erzeugung des Kaffees gepresst wird. Solche Kaffeevollautomaten haben sich bewährt und eignen sich zum Einsatz bei einem hohen Kaffeebedarf. Problematisch bei Kaffeevollautomaten ist, dass die Kaffeebohnen bei geringem Verbrauch und den dadurch bedingten längeren Verbleib in dem Kaffeebohnenbehälter an Aroma verlieren. Darüber hinaus ist nachteilig, dass ein Kaffeebohnensortenwechsel bei herkömmlichen Kaffeeautomaten nur nach Aufbrauchen der im Kaffeebohnenbehälter befindlichen Bohnenmenge möglich ist. Ein Vorteil von Kaffeeautomaten besteht darin, dass diese vergleichsweise selten mit Kaffeebohnen nachbefüllt werden müssen. Darüber hinaus sind die Betriebskosten günstiger, da keine Kapseln sondern Kaffeebohnen als Schüttgut eingesetzt werden.

Neben den vorerwähnten Kaffeevollautomaten existieren sogenannte Kapselkaffeemaschinen, in die Einweg-Kaffeepulverkartuschen eingesetzt werden können, die in der Kaffeemaschine mit unter Druck stehendem heißem Wasser durchströmt werden.

Solche Kaffeemaschinen haben sich insbesondere bei geringem Kaffeeverbrauch bewährt und werden immer dann bevorzugt, wenn Interesse an einem häufigen Sortenwechsel besteht. Nachteilig bei den Kapselkaffeemaschinen ist jedoch, dass für jeden Brühvorgang eine neue Kapsel eingesetzt werden muss, was nicht nur aufwendig ist, sondern zudem auch Verpackungsabfall erzeugt. Vorteilhaft ist, dass die in einer Kapsel eingekapselte Pulverportion vor Aromaverlust gut geschützt ist und ein Sortenwechsel durch die manuelle Auswahl einer entsprechenden Kapsel auf einfache Weise vollziehbar ist. Ein weiterer Vorteil von Kapselmaschinen ist, dass diese technisch wesentlich einfacher aufgebaut sind und dadurch robuster bzw. störunanfälliger ausgeführt werden können. So kann beispielsweise auf die komplette Mahleinheit sowie einen Kaffeebohnenvorratsbehälter verzichtet werden.

Zubereitungsvorrichtungen, die speziell für einen mittleren Kaffeebedarf ausgelegt sind, existieren bisher nicht.

Aus der DE 20 2006 008 409 ist eine Vorrichtung zum selbsttätigen Auflösen von Instantmilchpulver bekannt, wobei die Vorrichtung einen manuell nachfüllbaren Vorratsbehälter aufweist, aus welchem das Pulver schwerkraftbedingt auf eine Förderschnecke fällt, mit welcher das Pulver in eine Aufschäumeinheit transportiert wird, in welcher der dosierten Pulvermenge Heißwasser zugesetzt wird.

Aus der EP 1 103 210 A1 ist eine Vorrichtung zur Herstellung von Getränken aus Instant-Pulvern bekannt, wobei das Pulver wasserlöslich sein muss - die Verarbeitung von Kaffeebohnenpulver ist mit der bekannten Vorrichtung nicht möglich. Die Vorrichtung zeichnet sich dadurch aus, dass diese einen Vorratsbehälter umfasst, in dem eine Vielzahl von Stangen, jeweils bestehend aus verpresstem, wasserlöslichem Instant-Getränkezubereitungspulver aufgenommen sind. Die Stangen können mittels eines Kolbens axial verstellt werden, hin zu einer Schneideinheit, mit der von der Stange einzelne Pulverportionen abgetrennt werden können, um dann in Wasser gelöst zu werden. Vorteilhaft an der Vorrichtung ist, dass von einem stangenförmigen Vorrat Getränkeportionen abgetrennt werden können. Nachteilig ist jedoch, dass die ungeschützt in den Vorratsbehälter aufeinander angeordneten Stangen weiterhin Oxidationserscheinungen ausgesetzt sind.

Die US 2002/0145010 A1 betrifft eine Dosiereinrichtung, bei welcher eine Kartusche mit pulverförmigem Material austauschbar festgelegt werden kann. Die Förderung des Pulvers erfolgt schwerkraftbedingt, wobei hierdurch zwangsweise Luft und damit Sauerstoff in den Pulvervorrat eindringt, bevor die Kartusche manuell wieder verschlossen werden kann, was zu einem schnelleren Verderb des Pulvers führt.

Die JP 10211105 A zeigt eine Vorrichtung zur MISO-Suppen-Herstellung. Die Vorrichtung umfasst einen Vorratsbehälter für ein pastöses Ausgangsmaterial, welches mittels einer Schlauchpumpe gefördert wird. Der Vorrat ist mit einem Deckel verschlossen.

Aus der US 2010/320225 A1 ist eine Getränkezubereitungsvorrichtung bekannt, bei der ein Getränkesubstrat schwerkraftbedingt aus einem Vorratsbehälter ausgegeben wird.

Ausgehend von dem vorgenannten Stand der Technik liegt der Erfindung die Aufgabe zugrunde, ein Zubereitungsverfahren und eine Zubereitungsvorrichtung für einen mittleren Bedarf einer aus gemahlenen Kaffeebohnen herzustellenden Kaffeezubereitung sowie eine hierfür geeignete Kartusche anzugeben.

Das Verfahren und die Vorrichtung sollen möglichst viele Vorteile von Kaffeeautomaten einerseits und Kapselmaschinen andererseits vereinen und deren jeweilige Nachteile im Hinblick auf einen mittleren Verbrauch möglichst reduzieren. So soll das Aroma des Zubereitungsgrundstoffes, insbesondere des gemahlenen Kaffees bei mittlerem Verbrauch länger erhalten bleiben als dies bisher bei Kaffeevollautomaten möglich ist, wobei gleichzeitig nicht nach jeder Zubereitung ein Nachfüllen von Zubereitungsgrundstoff notwendig sein soll, wie dies bei bisherigen Kapselmaschinen der Fall ist. Zudem soll eine geeignete Schutz-Kapsel (Kartusche) für das Pulver aus gemahlenen Kaffeebohnen angegeben werden.

Diese Aufgabe wird hinsichtlich des Herstellungsverfahrens mit den Merkmalen des Anspruchs 1, hinsichtlich der Kaffee-Zubereitungsvorrichtung mit den Merkmalen des Anspruchs 10 und hinsichtlich der Kartusche mit den Merkmalen des Anspruchs 15 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüche und/oder den Figuren offenbarten Merkmalen.

Der Erfindung liegt der Gedanke zugrunde, anstelle von bisher bekannten, eine einzige bei einem Brühvorgang vollständig aufzubrauchende (nach dem Brühvorgang zurückbleibende) Kaffeebohnenpulverportion beinhaltenden Kartusche eine, vorzugsweise als Einwegkartusche ausgebildete Kartusche einzusetzen, die mit einem, vorzugsweise verpressten, Kaffeebohnenpulvervorrat vorgefüllt ist, wobei dieser Pulvervorrat für mehrere, d.h. mindestens zwei, vorzugsweise mehr als zwei Zubereitungszyklen ausreicht. Anders ausgedrückt umfasst der, vorzugsweise am Stück, d.h. nicht in voneinander getrennten Kompartimenten vorliegende Pulvervorrat mehrere Pulverportionen, die aus dem Pulvervorrat herausdosierbar bzw. abtrennbar sind. Insbesondere umfasst die Kartusche eine einzige Pulverstange, die durch die Kartusche vor Umwelteinflüssen, insbesondere einem Sauerstoff- und/oder Feuchtigkeitskontakt geschützt ist.

Die dosierte, d.h. von dem Kaffeebohnenpulvervorrat abgetrennte Pulverportion wird erfindungsgemäß nicht wie bei bekannten Kapselmaschinen in der Kapsel bzw. durch die Kapsel hindurchgebrüht sondern in eine automatische Zubereitungseinrichtung überführt, in welcher der Kaffee entsteht, indem zu der Pulverportion eine mit Hilfe von Heizmitteln erhitztes Wasser zugesetzt und durch die Pulverportion gefördert, insbesondere gepresst wird, wobei die ausgelaugte Pulverportion als Trester zurückbleibt und bevorzugt manuell oder automatisch ausgestoßen wird. Zum Fördern der Flüssigkeit ist bevorzugt eine Pumpe vorgesehen.

Bei der Verarbeitung der Kaffeepulverportion in der Zubereitungseinrichtung genauer in einer Brüheinheit der Zubereitungseinrichtung wird also das bevorzugt unter Druck stehende Wasser durch die Pulverportion hindurchgepresst, wobei die Pulverportion (dann Trester) vor einem Auslass zurückgehalten wird, insbesondere mittels eines Filters oder Siebes.

Zum Dosieren der Kaffeepulverportion aus der Kartusche wird erfindungsgemäß der gesamte Pulvervorrat, insbesondere relativ zu der Kartusche, bewegt, d.h. verstellt, bevorzugt relativ zu den später noch zu erläuternden Schermittel der Dosiermittel, mit denen die Kaffeeportion von dem Pulvervorrat abgetrennt wird. Wie ebenfalls später noch erläutert werden wird, gibt es grundsätzlich zwei unterschiedliche Verstell- bzw. Vorschubmöglichkeiten zum Verschub des gesamten Pulvervorrats. Gemäß einer ersten bevorzugten Variante wird der Pulvervorrat relativ zu der, vorzugsweise feststehenden Kartusche verstellt, beispielsweise in dem ein Druckstempel der Dosiermittel in die Kartusche eingreift und den Pulvervorrat in der Kartusche in Richtung einer Auslassöffnung bzw. darüber hinaus verschiebt, wobei dann der Überstand als Kaffeeportion abgetrennt werden kann, oder nur ein Teil des Überstandes. Der Druckstempel kann automatisch, beispielsweise elektromotorisch antreibbar sein und/oder manuell, beispielsweise mittels eines Handhebels, dessen Verstellbewegung in einen Vorschub des Druckstempels umgesetzt wird. Bei der alternativen Vorgehensweise wird der gesamte Pulvervorrat zusammen mit der Kartusche, vorzugsweise relativ zu einer Kartuschenaufnahme automatisch oder manuell verstellt und es erfolgt bevorzugt eine Abtrennung der Pulverportion mit Hilfe von, beispielsweise ein Messer oder eine Pulverportionsaussparung umfassenden Schermitteln zusammen mit einem die Pulverportion umschließenden Kartuschenabschnitt.

Das Dosieren der Pulverportion aus der Kartusche bzw. aus dem mehrere Pulverportionen umfassenden Pulvervorrat erfolgt dabei vorzugsweise unter Druckbeaufschlagung des Pulvervorrats, vorzugsweise unter mittelbarer Druckbeaufschlagung desselben, indem mit Hilfe von später noch zu erläuternden Dosiermitteln die Kartusche druckbeaufschlagt wird, um so beispielsweise ein Kartuschenabschnitt, insbesondere ein Kartuschenboden zu verstellen oder zu deformieren oder aber in dem ein Kartuschenabschnitt mit samt darin enthaltener Pulverportion abgetrennt wird.

Erfindungsgemäß ist vorgesehen, dass die Zubereitungsvorrichtung derart ausgebildet ist, dass die Kartusche in dieser verschließbar ist. Anders ausgedrückt sind Verschlussmittel zum automatischen oder manuellen, bevorzugt zumindest näherungsweise aromendichten, Verschließen der Kartusche, insbesondere einer Auslassöffnung (Dossieröffnung) der Kartusche, vorzugsweise nach einer Dosierung, d.h. nach Entnahme einer Pulverportion vorgesehen, um somit eine lange Haltbarkeit zu gewährleisten bzw. Oxidationsprozesse deutlich zu verlangsamen.

Im Hinblick auf den Zeitpunkt des zumindest teilweise, vorzugsweise vollständigen Verschließens der Kartusche gibt es unterschiedliche Möglichkeiten. Ganz besonders bevorzugt ist es, wenn, wie später noch erläutert werden wird, automatisch noch während des Dosiervorgangs, insbesondere des Schervorgangs das Verschließen mit Hilfe der Schermittel und/oder mit Hilfe von fakultativ vorgesehenen Transportmitteln erfolgt. Auch ist es denkbar, dass hiervon unterschiedliche Verschlussmittel vorgesehen werden. Grundsätzlich ist es möglich, dass die Kartusche während des Dosierens, d.h. des Abtrennens bzw. Abscherens der Pulverportion vom Pulvervorrat verschlossen wird, oder danach, beispielsweise vor dem Überführen der Pulverportion zu einer Zubereitungseinrichtung, und/oder während des Überführens der Pulverportion zu der Zubereitungseinrichtung und/oder nach dem Überführen. Auch ist es denkbar, dass das Verschließen erst während oder nach dem Durchfluss (Brühvorgang) von erhitztem Wasser durch die Pulverportion innerhalb der Brüheinheit erfolgt.

Im einfachsten Fall verschließen die, ggf. Elastomerdichtmittel umfassenden Verschlussmittel eine Kartuschenöffnung, beispielsweise mit einem schieberartigen Bauteil, wobei es noch weiter bevorzugt ist, wenn eine Verschlussrichtung bzw. Verstellrichtung der Verschlussmittel senkrecht zu einer Dosierrichtung verläuft. Ganz besonders bevorzugt ist die Zubereitungsvorrichtung derart ausgelegt, dass die Kartusche in der Vorbereitungsvorrichtung nach der Entnahme einer Pulverportion verschlossen wird und so lange verschlossen bleibt, bis eine weitere Pulverportion aus dem Pulvervorrat der Kartusche entnommen werden soll. Ganz besonders bevorzugt ist es, wenn die Auslassöffnung, insbesondere manuell oder automatisch, vor dem Dosieren einer Kaffeepulverportion in der Kaffeezubereitungsvorrichtung geöffnet wird.

Das erfindungsgemäße Verfahren und die erfindungsgemäße Zubereitungsvorrichtung haben gegenüber den bekannten Zubereitungskonzepten erhebliche Vorteile. So kann das Aroma aufgrund der Kapselung des Pulvervorrates vergleichsweise lange bewahrt werden. Darüber hinaus kann die Vorrichtung vergleichsweise einfach aufgebaut werden, da auf ein Mahlwerk verzichtet werden kann. Zudem muss nicht wie bei bekannten Kapselmaschinen nach jedem Zubereitungsvorgang ein Wechsel der Kartusche erfolgen, sondern es können nacheinander mehrere Pulverportionen aus ein und derselben Kartusche bzw. von ein und demselben Pulvervorrat abgetrennt und zu Zubereitungszwecken in die Zubereitungseinrichtung überführt werden.

Hierdurch wird nicht nur die Handhabung einer erfindungsgemäßen Vorrichtung bzw. die Durchführung eines erfindungsgemäßen Verfahrens komfortabel, sondern zugleich wird auch der entstehende Abfall reduziert. Die zum Einsatz kommende Kartusche ist bevorzugt aromadicht und umfasst einen Aromaverschluss, der vor dem Einsetzen in eine Kartuschenaufnahme der Zubereitungseinrichtung entfernt wird. Auch ist es denkbar, dass ein von einem Kartuschenabschnitt gebildeter Verschluss automatisch nach dem Einsetzen in die Zubereitungsvorrichtung, beispielsweise durch Abtrennen entfernt wird. Bei den zum Einsatz kommenden Kartuschen handelt es sich um saubere und handliche Gebinde, wobei das Produkt (Pulvervorrat) bis zum Verbrauch der letzten Portion verschlossen sein kann.

Eine Aufnahme von Feuchtigkeit kann zudem verhindert werden. Die Vorrichtung bzw. das Verfahren eignen sich vor allem zum Einsatz im Büro und Kleingastronomiebereich, wo mittlere Getränkemengen oder Suppenmengen konsumiert werden. So können mit dem Verfahren und der Vorrichtung beispielsweise in (Aroma-) Kartuschen aufbewahrte Trinkschokoladenpulver, Milchpulver, gemahlener Kaffee oder Teeblätter verarbeitet bzw. zu Getränken zubereitet werden. Auch ist mit dem Verfahren bzw. der Vorrichtung die Herstellung von Suppen einfacherweise möglich.

Im Hinblick auf die konkrete Ausbildung der zum Einsatz kommenden Kartusche gibt es unterschiedlichste Möglichkeiten. Ganz besonders bevorzugt ist es, wenn die Kartusche eine Metallhülle, insbesondere aus einer Leichtmetalllegierung, bevorzugt einer Aluminiumlegierung umfasst. Zusätzlich oder alternativ kann auch eine Kunststoffhülle vorgesehen werden, bevorzugt aus vergleichsweise starrem Kunststoff. Insgesamt ist es vorteilhaft, wenn die Kartusche eine Rohr- bzw. Stangenform aufweist und einen stangenförmigen Pulvervorrat unmittelbar begrenzt bzw. umschließt.

Ebenso ist es denkbar, dass die Kartusche eine folienartige Haut aufweist, bevorzugt um eine Pulverportion samt Folienabschnitt abtrennen und in die Zubereitungseinrichtung überführen zu können. Auch ist es denkbar, dass die Hülle aus einer lebensmittelverträglichen Lackschicht besteht, mit der das, vorzugsweise verpresste Pulver umhüllt ist. Bevorzugt ist die Kartusche, zumindest näherungsweise, aromadicht, bzw. umfasst oder besteht aus einer Barriereschicht gegen Feuchtigkeit, insbesondere Wasserdampf und Gase, bevorzugt Sauerstoff.

Wie erläutert, umfasst die zum Einsatz kommende Kartusche mehrere Pulverportionen, d.h., es kann mehrfach eine Pulverportion von dem mehrere Pulverportionen umfassenden Pulvervorrat dosiert werden, wobei bevorzugt eine Pulverportion zur Herstellung von einem oder maximal zwei Getränkeportionen oder Suppenportionen, also im Falle von Kaffe zur Herstellung von einer oder maximal zwei Tassen ausreicht. Wird beispielsweise als Pulver Kaffeepulver eingesetzt, so hat es sich als vorteilhaft herausgestellt, wenn eine Pulverportion für die Herstellung einer Tasse, etwa 7g bis 14g wiegt oder in etwa 14g bis 28g für den Fall, dass eine Pulverportion zum Befüllen von zwei Kaffeetassen ausreichen soll. Ganz besonders bevorzugt ist es, wenn in der Kartusche mindestens 30g Pulver, vorzugsweise mindestens 50g Pulver, noch weiter bevorzugt zwischen etwa 40g und 150g Pulver, noch weiter bevorzugt im verpressten Zustand aufgenommen sind.

Ganz besonders bevorzugt ist eine Ausgestaltung des Verfahrens bzw. der Kaffeezubereitungsvorrichtung, bei der der in der Kapsel verbleibende bzw. befindliche Pulvervorrat allseitig verschlossen ist bzw. allseitig begrenzt ist bzw. an Kartuschewänden und/oder Verschlussmittel anliegt. Dadurch wird erreicht, dass das Kartuschenvolumen zu jeder Zeit frei ist von größeren Gasmengen bzw. frei ist von Leerräumen. Es ist also in Weiterbildung der Erfindung vorgesehen, das den Pulvervorrat umschließende Kapselvolumen an die Menge von Pulvervorrat anzupassen bzw. mit abnehmenden Pulvervorrat entsprechend zu verringern, insbesondere während oder durch das Dosieren der Pulverportion. Dies kann beispielsweise dadurch erreicht werden, dass zum Dosieren einer Pulverportion ein Stempel und/oder Kartuschenboden in der Kartusche verstellt wird, wobei durch den Verstellweg das entnommene Pulverportionsvolumen kompensiert wird. Besonders zweckmäßig ist es, wenn die Pulverportion in einem Pulverportionsstück von dem verbleibenden Pulvervorrat abgetrennt, insbesondere abgeschnitten bzw. abgeschert wird. Hierdurch wird der Sauerstoffkontakt, insbesondere zum verbleibenden Pulvervorrat deutlich minimiert.

Ein wesentlicher Vorteil des erfindungsgemäßen Verfahrens bzw. der erfindungsgemäßen Zubereitungsvorrichtung kann dadurch realisiert werden, wenn die Größe einer zu entnehmenden Pulverportion, d.h. deren Gewicht und/oder Volumen veränderbar bzw. einstellbar ist, um somit die Konzentration (Stärke) des Kaffees an individuelle Bedürfnisse unterschiedlicher Benutzer anpassen zu können. Im Falle des Vorsehens eines Stempels zur Dosierung kann die zu entnehmende Pulvermenge durch eine Veränderung des Stempelvorschubweges eingestellt werden. Denkbar ist es, die zu entnehmende Pulvermenge stufenlos oder in Stufen einzustellen, insbesondere durch eine entsprechende Ansteuerung eines bevorzugt als Schrittmotor ausgebildeten Antriebsmotors oder durch manuelles oder automatisches Verstellen eines fakultativen Anschlags für den Stempel. Dies kann manuell durch den Benutzer erfolgen, oder beispielsweise automatisch von der Zubereitungsvorrichtung, indem diese die Pulverart bzw. Kapselsorte erkennt und entsprechend von Voreinstellungen die gewünschte Pulvermenge einer Pulverportion einstellt.

Wie bereits angedeutet besteht eine bevorzugte Möglichkeit der Ausbildung der Dosiermittel darin, wenn diese einen Druckstempel umfassen. Im Hinblick darauf, wie der Druckstempel mit dem Pulvervorrat bzw. der Kartusche zusammenwirkt, gibt es unterschiedliche Möglichkeiten. Bevorzugt wird der Druckstempel so eingesetzt, dass mit diesem unmittelbar oder mittelbar die Pulverportion aus der Kartusche herausgedrückt bzw. herausgepresst wird. Dies kann durch eine Deformation der Kartusche erfolgen und/oder durch Hineinverstellen des Druckstempels in die Kartusche vorzugsweise von einem von einer Auslassöffnung (Dosieröffnung) abgewandten Ende her. Der Druckstempel kann dabei entweder einen Kartuschenboden bilden und somit in unmittelbaren Kontakt mit dem Pulvervorrat treten oder aber einen Kartuschenabschnitt, insbesondere einen Kartuschenboden, einer, bevorzugt zylindrischen, Kartusche verstellen, bevorzugt derart, dass dieser Boden oder der Stempel in ständigem Kontakt mit dem verbleibenden Pulvervorrat verbleibt, um einen Luftausschluss in der Kartusche zu gewährleisten.

Auch ist es denkbar, dass der Druckstempel dazu genutzt wird, die gesamte Kartusche, d.h. nicht nur den Pulvervorrat, vorzugsweise relativ zu einer Kartuschenaufnahme der Vorrichtung zu verschieben, vorzugsweise in Richtung von später noch zu erläuternden Schermitteln, mit denen die zu dosierende Pulverportion, dann bevorzugt samt eines Kartuschenabschnittes abgetrennt wird.

Wie zuvor bereits erläutert, ist es vorteilhaft, wenn die Dosiermittel Schermittel zum Abscheren einer Pulverportion von dem Pulvervorrat umfassen. Denkbar ist dabei eine Ausführungsform, bei der die Schermittel gleichzeitig Transportmittel zum transportieren der Pulverportion sind. In diesem Fall ist es von Vorteil, wenn die Schermittel eine Aussparung umfassen, in die, beispielsweise mittels eines Druckstempels eine Pulverportion eingeschoben wird, die dann durch Verstellen der Schermittel relativ zu der Kartuschenaufnahme, vorzugsweise am Stück, abgetrennt wird. Ebenso ist es möglich, dass die Schermittel als eine Art Messer ausgebildet sind, um einen aus der Kartusche herausgedrückten Pulverabschnitt (Pulverportion) abzutrennen. Ebenso ist es möglich, dass die abzutrennende Pulverportion samt einem diesen umgebenden Kartuschenabschnitt abgetrennt wird. Im letztgenannten Fall ist es möglich, die Pulverportion zusammen mit dem abgetrennten Kartuschenabschnitt in die Zubereitungseinrichtung zu überführen oder zuvor den Kartuschenabschnitt automatisch zu separieren.

Wie eingangs erläutert ist es bevorzugt, wenn die Kartusche, insbesondere eine Kartuschenöffnung, nach der Entnahme einer Pulverportion verschlossen wird. Hierzu können die Schermittel bzw. eine Abschnitt der Schermittel oder ein mit den Schermitteln wirkverbundenes, insbesondere mechanisch gekoppeltes Verschlussteil als Verschlussmittel dienen. Auch ist es möglich, dass Transportmittel zum Überführen bzw. Transportieren der Pulverportion in Richtung zu der Zubereitungseinrichtung, insbesondere in die Zubereitungseinrichtung hinein als Verschlussmittel dienen, wobei es noch weiter bevorzugt ist, wenn diese Transportmittel von, vorzugsweise eine Aussparung aufweisenden Schermitteln zum Abtrennen der Pulverportion gebildet sind.

Um die Auswahl an unterschiedlichen Kaffeesorten für den Nutzer einer erfindungsgemäßen Zubereitungsvorrichtung zu erhöhen, ist in Weiterbildung des Verfahrens und der Vorrichtung vorgesehen, dass die Zubereitungsvorrichtung mehrere Kartuschenaufnahmen für jeweils mindestens eine Kartusche aufweist und dass vor der Entnahme einer Pulverportion eine der Kartuschen, insbesondere durch eine entsprechende elektronische Menüführung ausgewählt werden kann, aus der dann die Pulverportion mit Hilfe von Dosiermitteln entnommen wird.

Ganz besonders bevorzugt ist es, wenn zur Zubereitung des Kaffees (Kaffeezubereitung), beispielsweise zur Herstellung eines Cappuccinos oder Schokoccinos od.dgl. zusätzlich zu den in einer Brüheinheit zu verarbeitenden Kaffeebohnenmehlpulver, Milchpulver und/oder Kakaopulver (Schokopulver) eingesetzt wird. Bevorzugt befindet sich das entsprechende, bevorzugt wasserlösliche Pulver (Milchpulver oder Schokopulver) analog zu dem Kaffeemehlpulver in einer, mehrere Portionen des jeweiligen Pulvers umfassenden Kartusche, die bevorzugt aufgebaut ist, wie eine zuvor bereits beschriebene Kaffeepulverkartusche. Entsprechend ist dann weiterbildungsgemäß in der Zubereitungsvorrichtung mindestens eine entsprechende (weitere) Kartuscheaufnahme vorgesehen und Dosiermittel zum Dosieren einer Pulverportion aus dem Pulvervorrat der Kartusche, wobei auch hier bevorzugt sichergestellt ist, dass zu einem Zeitpunkt nach dem Dosieren die entsprechende Kartusche geeignet, beispielsweise durch Schermittel und/oder Transportmittel oder separate Verschlussmittel verschlossen wird. Im Falle des Einsatzes von Milchpulver wird dieses bevorzugt mit heißem Wasser und/oder Wasserdampf versetzt, insbesondere in einer an sich bekannten Milchschäumkammer. Kakaopulver kann ebenfalls mit erhitztem Wasser versehen und/oder unmittelbar einer erhitzten Milch und/oder dem Kaffee-Produkt aus der Brühkammer zugesetzt werden.

Ganz besonders bevorzugt werden Schermittel und Verschlussmittel und/oder Transportmittel von demselben verstellbaren Bauteil, insbesondere einem Schieber gebildet.

Um den Kaffeebohnenmehlpulvervorrat in der Kartusche optimal zu schützen, ist es bevorzugt, wenn die Vorrichtung Inertgasmittel aufweist, mit denen die Kartusche unter eine Inertgasatmosphäre, beispielsweise einer Stickstoffatmosphäre in der Vorrichtung aufbewahrt werden kann. Bevorzugt kann hierzu der Kartusche, beispielsweise aus einer Druckflasche automatisch Inertgas zugeführt werden. Zusätzlich oder alternativ können Kühlmittel zum Kühlen der Kartusche vorgesehen werden, da bei niedrigeren Temperaturen Oxidationsprozesse langsamer verlaufen und das Aroma, insbesondere ein Kaffeearoma langsamer verloren geht.

In Weiterbildung der Erfindung ist mit Vorteil vorgesehen, dass die zu entnehmende Pulvermenge der Pulverportion manuell und/oder automatisch einstellbar und/oder auswählbar ist.

In Weiterbildung der Erfindung ist mit Vorteil vorgesehen, dass die Pulverportion mit Hilfe von, vorzugsweise die Schermittel umfassenden, Transportmitteln in Richtung, insbesondere zu der Zubereitungseinrichtung transportiert wird.

In Weiterbildung der Erfindung ist mit Vorteil vorgesehen, dass die Kartusche mit Hilfe der Transportmittel oder mit einem mit den Transportmitteln wirkverbundenen, vorzugsweise mechanisch gekoppelten Verschlussteil verschlossen wird.

In Weiterbildung der Erfindung ist mit Vorteil vorgesehen, dass vor der Entnahme der Pulverportion eine von mehreren in einer Zubereitungsvorrichtung aufgenommenen Kartuschen ausgewählt wird, aus der die Pulverportion dann entnommen wird.

In Weiterbildung der Erfindung ist mit Vorteil vorgesehen, dass die Kartusche unter einer Inertgasatmosphäre aufbewahrt und/oder gekühlt wird.

In Weiterbildung der Erfindung ist mit Vorteil vorgesehen, dass zur Zubereitung des Kaffees eine Milchpulverportion aus einer mit einem mehrere Milchpulverportionen umfassenden, vorzugsweise verpressten Milchpulvervorrat vorgefüllten Milchpulverkartusche dosiert und mit Wasser und/oder Wasserdampf versetzt, und ggf. erhitzt und/oder aufgeschäumt wird, und/oder dass zur Zubreitung des Kaffees eine Kakaoportion aus einer mit einem mehrere Kakaopulverportionen umfassenden, vorzugsweise verpressten Kakaovorrat vorgefüllten Kakaopulverkartusche dosiert wird.

In Weiterbildung der Erfindung ist mit Vorteil vorgesehen, dass Mittel zum Einstellen der mittels der Dosiermittel dosierbaren Pulvermenge der Pulverportion vorgesehen sind.

In Weiterbildung der Erfindung ist mit Vorteil vorgesehen, dass in der Zubereitungseinheit die Pulverportion in der heißen Flüssigkeit auflösbar ist und/oder dass die heiße Zubereitungsflüssigkeit in einer Brüheinheit der Zubereitungseinheit unter Druck durch die Pulverportion unter Aufnahme von Geschmacks- und/oder Geruchs- und/oder Farbstoffen hindurch förderbar ist.

In Weiterbildung der Erfindung ist mit Vorteil vorgesehen, dass in der Kartuschenaufnahme eine Kartusche aufgenommen ist, die mit einem, mehrere Pulverportionen umfassenden Pulvervorrat gefüllt ist.

Die Erfindung führt auch auf eine Verwendung einer mit mehreren Kaffeebohnenmehlpulverportionen gefüllte Kartusche zum Einsatz in einer erfindungsgemäßen Kafffee-Zubereitungsvorrichtung. Im Hinblick auf mögliche Ausgestaltungen der Kartusche wird auf die vorstehende Offenbarung verwiesen. Besonders bevorzugt ist es, wenn die Kartusche eine Hülle aus Kunststoff und/oder Metall umfasst. Bevorzugt ist die Kartusche langgestreckt und rohrförmig ausgestaltet. Ganz besonders bevorzugt ermöglicht die Kartusche das Einführen eines Stempels, der entweder unmittelbaren Kontakt zu dem Pulvervorrat in der Kartusche erhält oder bevorzugt über einen verschiebbaren Kartuschenboden von diesem getrennt ist.

Weitere Vorteile, Merkmale und Einzelheiten der Erfindung ergeben sich aus der nachfolgenden Beschreibung bevorzugter Ausführungsbeispiele sowie anhand der Figuren.

Diese zeigen in den
- Fig. 1a bis Fig. 1i: in detaillierten, aufeinanderfolgenden Abläufen eine erste Verfahrensvariante unter Verwendung einer Zubereitungsvorrichtung, bei der eine Pulverportion am Stück mit Hilfe von kombinierten Scher- und Transportmitteln in eine Zubereitungseinrichtung der Zubereitungsvorrichtung überführt wird,
- Fig. 2a bis Fig. 2d: eine zweite Verfahrensvariante, bei der in der Zubereitungseinrichtung Wasser unter Druck durch die abgetrennte Kaffeeportion hindurch gedrückt und die Pulverportion vor einem Auslauf zurückgehalten wird, und
- Fig. 3a bis Fig. 3c: eine dritte mögliche Verfahrensvariante, bei welcher eine Kaffeeportion mit Hilfe von Schermitteln am Stück abgetrennt wird und dann gravitationskraftbedingt in ein Aufnahmebehältnis der Zubereitungseinrichtung hineinfällt.

In den Figuren sind gleiche Elemente und Elmente mit der gleichen Funktion mit den gleichen Bezugszeichen gekennzeichnet.

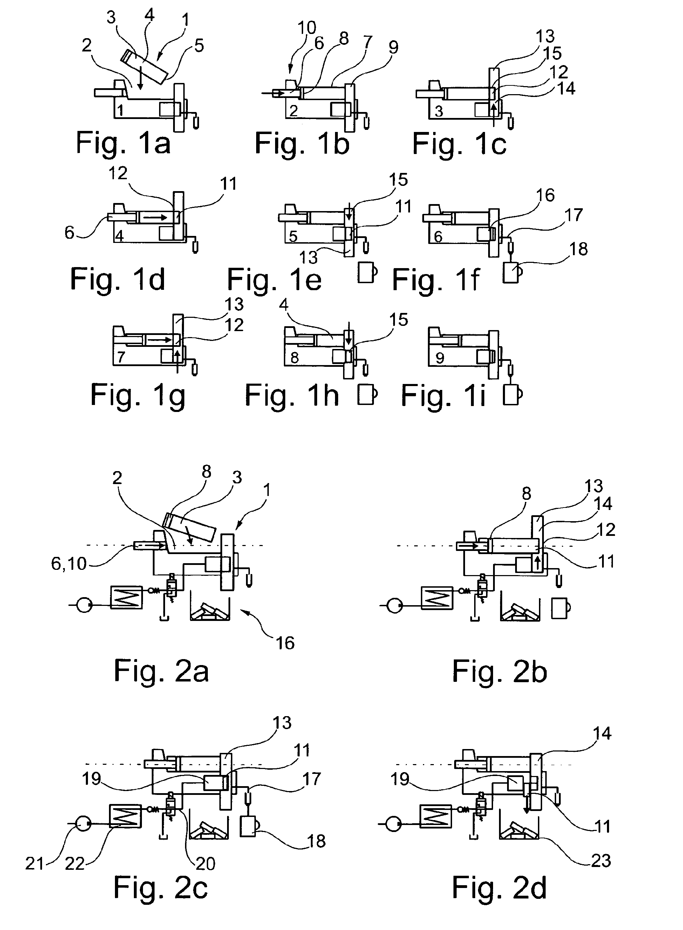

Anhand der Fig. 1a bis 1i wird im Folgenden eine erste Verfahrensvariante erläutert, die unter Verwendung einer Kaffeezubereitungsvorrichtung durchführbar ist. Aus Übersichtlichkeitsgründen wurde auf die Darstellung einer an sich bekannten Heizeinrichtung zum Aufheizen der in eine eine Brühkammer umfassenden Zubereitungseinrichtung der Zubereitungsvorrichtung zu fördernder Flüssigkeit, insbesondere Wasser verzichtet.

Wie sich aus Fig. 1 ergibt, umfasst die zur Anwendung kommende Zubereitungsvorrichtung 1 eine Kartuschenaufnahme 2 zur Aufnahme einer hier als Einwegkartusche ausgebildeten Kartusche 3, die vorgefüllt ist mit einem verpressten Kaffebohnenmehlpulvervorrat 4, der so bemessen ist, dass eine Mehrzahl von Pulverportionen nacheinander aus diesem entnommen bzw. dosiert und zu Kaffee (z.B. Espresso, normaler Kaffee, Milchkaffee, Cappuccino od.dgl.) verarbeitet werden können.

Bei dem ersten, in Fig. 1a gezeigten Verfahrensschritt, wird die vollgefüllte, beispielsweise als zylindrische Aluminiumkartusche oder als Kunststoffkartusche, insbesondere aus PP oder PC, ausgebildete Kartusche 3 in die Kartuschenaufnahme 2 eingesetzt, vorzugsweise nach Entfernen eines nicht dargestellten Aromaverschlusses von einer endseitigen Auslassöffnung 5 der Kartusche 3.

Daraufhin fährt, vorzugsweise mittels eines nicht dargestellten Elektromotors oder alternativ manuell, beispielsweise mittels eines Handhebels angetrieben, ein Druckstempel 6 gegen einen in einem Kartuschenmantel 7 verstellbaren Boden 8, von einer von der Auslassöffnung 5 abgewandten Seite her. In Fig. 1d ist zu erkennen, dass die Auslassöffnung 5 mit Hilfe von als Schieber ausgebildeten Verschlussmitteln 9 verschlossen ist. Bevorzugt wird der Druckstempel 6, der Bestandteil von Dosiermitteln 10 ist, so weit in die Kartusche 3 hineinverstellt, dass der gesamte Pulvervorrat 4 gegen die Verschlussmittel 9 gedrückt wird.

In dem in Fig. 1c dargestellten Verfahrensschritt beginnt der eigentliche Dosierschritt, bei dem eine beispielsweise in den Fig. 1d und 1e gezeigte Pulverportion 11 am Stück von dem Pulvervorrat abgetrennt wird. Zunächst werden hierzu die Verschlussmittel 9 senkrecht zur Bewegungsrichtung des Druckstempels 6 bewegt, derart, dass eine Aussparung 12 (Pulverportionsaufnahme) mit der Auslassöffnung 5 der Kartusche 3 fluchtet. Die Aussparung 12 befindet sich in dem Schieber 13, der gleichzeitig Transportmittel 14 zum Überführen der Pulverportion in eine Zubereitungseinrichtung bildet, gleichzeitig bildet der Schieber 13 die Verschlussmittel 9.

Zudem werden von dem Schieber 13 Schermittel 15 gebildet, die, wie später noch erläutert werden wird, die Pulverportion am Stück vom Pulvervorrat 4 abtrennen.

In Fig. 1d ist zu erkennen, dass nachdem die Aussparung 12 mit der Auslassöffnung 5 zur Deckung gebracht wurde, der Druckstempel 6 der Dosiermittel 10 axial weiter in die Kartusche 3 hineinverstellt wird, wobei der Verstellweg proportional ist zu der Pulverportionsgröße bzw. der Pulvermenge, die, hier am Stück, in die Aussparung 12 des Schiebers 13 bzw. der Transportmittel 14 verschoben wird. Diese Menge ist bevorzugt einstellbar, wobei ein Antrieb des Druckstempels entsprechend der Vorgabe angesteuert wird.

Nachdem die gewünschte Pulverportion 11 in der Aussparung 12 angekommen ist, wird die Vorschubbewegung des Druckstempels 6 gestoppt und die Schermittel 15 in Form des Schiebers 13 mit Aussparung in Zeichnungsebene nach unten bewegt. Hier wird die Funktion der Schermittel 15 mit Aussparung 12 als Transportmittel 14 deutlich. Es wird auch deutlich, dass der Schieber 13 mit einem benachbart zur Aussparung 12 gelegenem Abschnitt die Verschlussmittel 9 bildet, mit welchen die Auslassöffnung 5 nach der Entnahme der Pulverportion 11 automatisch verschlossen wird.

In dem gezeigten Ausführungsbeispiel handelt es sich bei dem in der Kartusche 3 befindlichen Pulver um ein Mahlprodukt (Mehlprodukt) aus stark gerösteten Kaffeebohnen. Durch dieses wird in der unterhalb der Kartuschenaufnahme 2 gelegenen Zubereitungseinrichtung 16, genauer einer Brühkammer einer Brüheinheit, zuvor erhitztes heißes Wasser gepresst. Dabei gehen Farb- und Geschmacksstoffe des Kaffeepulvers in Lösung und gelangen mit dem heißen Wasser durch einen Auslasskanal in ein Behältnis 18 zu Konsumzwecken. Zurück bleibt Kaffeetrester.

In den Fig. 1g bis 1i ist nun verkürzt ein weiterer Zubereitungsschritt bzw. Dosierschritt gezeigt. Nach Fertigstellung der Lebensmittelzubereitung wird die Zubereitungseinrichtung 16, deren Teil hier die Aussparung 12 bildet geleert (nicht dargestellt) und wird in Fig. 1g wieder mit der Auslassöffnung 5 zur Deckung gebracht. Der Druckstempel 6 wird weiter in die Kartusche 3 hineinverstellt, wodurch der Pulvervorrat druckbeaufschlagt wird, bzw. eine Pulverportion 11 in die Aussparung 12 hinein transportiert wird, die daraufhin mit Hilfe des Schiebers 13 (Schermittel 15) von dem verbleibenden Pulvervorrat 4 abgetrennt und mit Hilfe der Transportmittel 14 in die Zubereitungseinrichtung 16 transportiert wird. Dort wird in Fig. 1 i wieder Heißwasser zugesetzt, wobei aus Übersichtlichkeitsgründen auf die Darstellung einer Pumpe zur Förderung des heißen Wassers sowie auf die Darstellung einer Heizeinrichtung verzichtet wurde.

Anhand der Fig. 2a bis 2d wird nun ein weiteres, mögliches Zubereitungsverfahren erläutert.

In Fig. 2a ist zu erkennen, dass zunächst eine vollgefüllte Kartusche 3 in eine Kartuschenaufnahme 2 eingesetzt wird, wobei dann ein Druckstempel 6 der Dosiermittel 10 die Kartusche 3 vorspannt, indem der Druckstempel 6 gegen den verschiebbaren Boden 8 gedrückt wird.

Die Aussparung 12 der als Schieber 13 ausgebildeten, kombinierten Scher- und Transportmittel 13, 14 wird durch Vorschub des Druckstempels 6 mit der am Stück zu entnehmenden Pulverportion 11 gefüllt und daraufhin in die Zubereitungseinrichtung verstellt. Diese umfasst dabei ein senkrecht zum Schieber 13 verstellbares Brühelement 19, mit dem eine von der Aussparung 12 ausgebildete Brühkammer öffnungs- und verschließbar ist. Brühelement 19 und Brühkammer bilden eine Brüheinheit der Zubereitungseinrichtung. An in das Brühelement 19 mündet eine Heißwasserleitung 20 zur Zuleitung von Heißwasser in die Zubereitungseinrichtung 16. Zur Erzeugung des Heißwassers wird Kaltwasser aus einem nicht dargestellten Wasserbehälter oder von einem Frischwasseranschluss mittels einer Förderpumpe 21 durch eine Heizeinrichtung 22 gefördert, wobei im Falle des Vorsehens eines Frischwasseranschlusses bei Bedarf auf die Pumpe verzichtet werden kann.

Wie sich aus Fig. 2c ergibt, wird die Pulverportion 11 also in die Zubereitungseinrichtung 16 befördert, wobei die in dem gezeigten Ausführungsbeispiel von der Aussparung 12 gebildete Brühkammer mittels des Brühelementes (Verschlusselement) verschlossen ist. Durch die Heißwasserleitung 20 wird Heißwasser unter Druck in die Aussparung 12 gepresst, durch die Pulverportion 11 hindurch in einen Auslasskanal 17 und fließt dann nach Aufnahme von Aromen und anderen löslichen Komponenten in ein (Konsumier-) Behältnis 18. Die Pulverportion 11 wird in der Aussparung 12 bzw. der Zubereitungseinrichtung 16 zurückgehalten mittels eines nicht dargestellten, bevorzugt metallischen Siebes/Filters in einem Bereich zwischen Aussparung 12 und Auslasskanal 17.

Nach Beendigung des Brühvorgangs wird die Brühkammer geöffnet, indem das Brühelement 19 verteilt wird, und zwar senkrecht zur Verstellrichtung der Transportmittel 14. Dabei wird die zu einer Tresterportion umgewandelte Pulverportion ausgestoßen und fällt in einen Tresterbehälter 23.

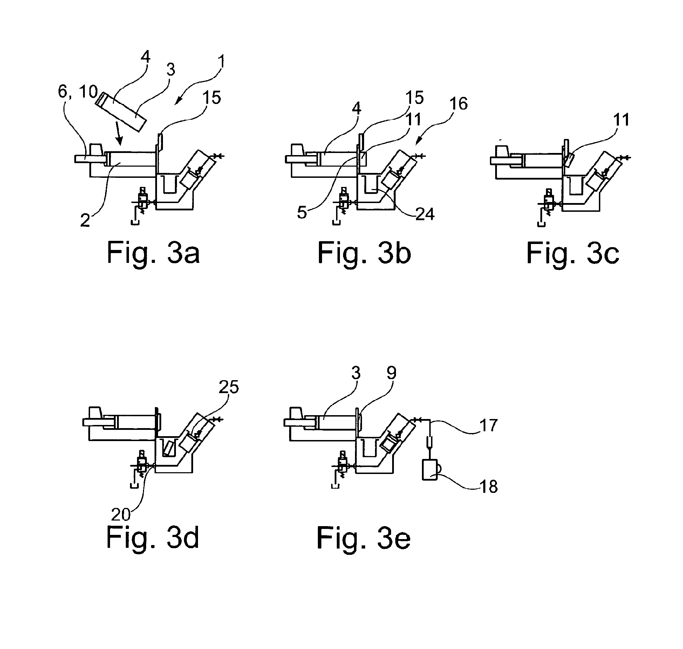

Eine weitere Verfahrensvariante wird nun anhand der Fig. 3a bis 3c beschrieben.

Zunächst wird eine Kartusche 3, die vollgefüllt ist mit einem Pulvervorrat 4 in einer Kartuschenaufnahme 2 eingesetzt und daraufhin ein Druckstempel 6 von Dosiermitteln 10 in die Kartusche 3 hineinverstellt.

Zu erkennen ist, dass die von einem Messer/Keil gebildeten Schermittel 15 nicht gleichzeitig Transportmittel sind. Die Schermittel 15 schneiden (scheren) nach dem Vorschub des gesamten Pulvervorrates 4 mittels eines Druckstempels die gewünschte Pulverportion ab und verschließt dabei die Auslassöffnung 5 der Kartusche. Bevorzugt wird das Messer erst wieder von der Auslassöffnung 5 weggeschoben, wenn ein neuer Dosiervorgang startet.

In einem Bereich unterhalb der Auslassöffnung 5 der Kartusche, bzw. unterhalb des Messers 15 (Schermittel) befindet sich ein Aufnahmebehältnis 24 der Zubereitungseinrichtung 16, die in der Art einer an sich bekannten Brüheinheit von Kaffeevollautomaten ausgebildet sein kann. Die in den Aufnahmebehälter 24 gefallene Pulverportion 11 wird mittels des Aufnahmebehälters 24 automatisch transportiert zu einem Filter 25 und bildet mit diesem eine Brühkammer aus, die endseitig von dem Filter 25 verschlossen ist. Durch eine Heißwasserleitung 20 wird sodann, wie sich aus Fig. 3e ergibt, Heißwasser durch die Pulverportion im Aufnahmebehälter 24 gepresst und strömt mit gelösten Elementen der Pulverportion durch den Auslasskanal 17 in einen Behälter 18, hier eine Tasse.

Aus Übersichtlichkeitsgründen ist eine Heizeinrichtung sowie eine Pumpe nicht dargestellt. Zu erkennen ist dass in Fig. 3e, also nach der Dosierung bzw. während der Zubereitung eines Getränks in der Zubereitungseinrichtung 16 (bis zum nächsten Dosiervorgang) die Kartusche 3 vollständig mittels der von den Schermitteln 15 gebildeten Verschlussmittel 9 verschlossen ist.

Das in den Fig. 3a bis 3c gezeigte Ausführungsbeispiel kann beispielsweise so modifiziert werden, dass nicht der gesamte Pulvervorrat 4 relativ zur Kartusche 3 mittels des Druckstempels 6 verstellt wird, sondern dass der Druckstempel die gesamte Kartusche 3 verschiebt und mittels der Schermittel 15 die entsprechende Pulverportion mit dem um diesen herum befindlichen Kartuschenabschnitt abgetrennt wird, wobei der Kartuschenabschnitt dann bevorzugt auch während des Brühvorgangs in der Zubereitungseinrichtung 16, hier dem Aufnahmebehälter 24 verbleibt.

### Bezugszeichenlisten

- 1: Zubereitungsvorrichtung
- 2: Kartuschenaufnahme
- 3: Kartusche
- 4: Pulvervorrat
- 5: Auslassöffnung
- 6: Druckstempel
- 7: Kartuschenmantel
- 8: Boden
- 9: Verschlussmittel
- 10: Dosiermittel
- 11: Pulverportion
- 12: Aussparung
- 13: Schieber
- 14: Transportmittel
- 15: Schermittel
- 16: Zubereitungseinrichtung
- 17: Auslasskanal
- 18: Behältnis
- 19: Brühelement
- 20: Heißwasserleitung
- 21: Förderpumpe
- 22: Heizeinrichtung
- 23: Tresterbehälter
- 24: Aufnahmebehältnis
- 25: Filter

## Patentansprüche

1. Verfahren zur automatisierten Herstellung einer Kaffeezubereitung mit einer eine Brüheinheit umfassenden Kaffeezubereitungsvorrichtung (1), umfassend die folgenden Schritte:
- Einsetzen einer, mit einem mehrere Pulverportionen (11) umfassenden, vorzugsweise verpressten, Pulvervorrat (4) aus gemahlenen Kaffeebohnen vorgefüllten Kartusche (3) in eine Kartuschenaufnahme (2) einer Zubereitungsvorrichtung (1),
- Automatisches oder zumindest teilweise manuelles Dosieren einer Pulverportion (11) aus dem Pulvervorrat (4), wobei hierzu der gesamte Pulvervorrat (4) mit Hilfe von Dosiermitteln (10) verstellt, vorzugsweise axial verschoben, und dann die Pulverportion (11) von dem Pulvervorrat (4) abgetrennt wird,
- Überführen der Pulverportion (11) zu einer Brüheinheit einer Zubereitungseinrichtung (16),
- Automatisches Zubereiten des Kaffees in der Brüheinheit unter Verwendung der Pulverportion (11) und einer erhitzten, trinkbaren Flüssigkeit, die die Pulverportion in der Brüheinheit, insbesondere unter Druck durchströmt,
- Verschließen der Kartusche (3) im Bereich einer Auslassöffnung (5) der Kartusche in der Zubereitungsvorrichtung,
**dadurch gekennzeichnet,**
**dass** die Dosiermittel (10) einen automatisch antreibbaren Druckstempel (6) umfassen, der zum Dosieren der Pulverportion in der Kartusche (3) bewegt wird und dabei entweder unmittelbar auf den Pulvervorrat (4) oder bevorzugt unmittelbar auf einen deformierbaren oder verstellbaren Kartuschenabschnitt drückt, oder der die gesamte Kartusche (3) verschiebt.

2. Verfahren nach Anspruch 1,
**dadurch gekennzeichnet,**
**dass** die Kartusche (3) mit Hilfe von Verschlussmitteln (9) nach der Entnahme der Pulverportion (11), bevorzugt bis zur Entnahme einer weiteren Pulverportion (11), automatisch oder manuell verschlossen wird.

3. Verfahren nach einem der vorhergehenden Ansprüche,
**dadurch gekennzeichnet,**
**dass** ein den Pulvervorrat (4) umschließendes Kapselvolumen, vorzugsweise durch und/oder bei der Dosierung der Pulverportion (11), so verändert wird, dass das Kapselvolumen nach der Entnahme der Pulverportion (11), zumindest näherungsweise, dem in der Kapsel verbleibenden, um die entnommene Pulverportion (11) reduzierten Pulvervorrat (4) entspricht.

4. Verfahren nach einem der vorhergehenden Ansprüche,
**dadurch gekennzeichnet,**
**dass** die Pulverportionen (11) am Stück von dem Pulvervorrat (4) abgetrennt und/oder zu der Zubereitungseinrichtung (16) überführt wird.

5. Verfahren nach einem der vorhergehenden Ansprüche,
**dadurch gekennzeichnet,**
**dass** die Dosiermittel (3) Schermittel (15), insbesondere ein Messer, umfassen, mit denen die zu dosierende Pulverportion (11) durch Druckbeaufschlagung von dem Pulvervorrat (4) abgetrennt wird, insbesondere zusammen mit einem Kartuschenabschnitt.

6. Verfahren nach Anspruch 5,
**dadurch gekennzeichnet,**
**dass** die Pulverportion (4) zusammen mit dem Kartuschenabschnitt der Zubereitungseinrichtung (16) zugeführt wird.

7. Verfahren nach einem der vorhergehenden Ansprüche,
**dadurch gekennzeichnet,**
**dass** die Kartusche (3) mit den Schermitteln (15) oder mit einem mit den Schermitteln (15) wirkverbundenen, insbesondere mechanisch gekoppelten Verschlussteil oder mit davon separaten Verschlussmitteln (9) verschlossen wird.

8. Verfahren nach einem der vorhergehenden Ansprüche,
**dadurch gekennzeichnet,**
**dass** vor der Entnahme einer ersten Pulverportion (11) ein Aromaverschluss, manuell oder automatisch, entfernt wird.

9. Verfahren nach einem der vorhergehenden Ansprüche,
**dadurch gekennzeichnet,**
**dass** in der Zubereitungsvorrichtung (1) von demselben Pulvervorrat (4) mindestens eine weitere Pulverportion (11) dosiert und in der Zubereitungseinrichtung (16) zu der Lebensmittelzubereitung verarbeitet wird.

10. Kaffeezubereitungsvorrichtung (1) zur, vorzugsweise automatisierten, Herstellung eines Kaffees, vorzugsweise zur Durchführung eines Verfahrens nach einem der vorhergehenden Ansprüche, umfassend eine Kartuschenaufnahme (2) für eine mit einem mehrere Pulverportionen (11) umfassenden, vorzugsweise verpressten, Pulvervorrat (4) aus gemahlenen Kaffeebohnen vorgefüllten Kartusche (3), Dosiermittel (10) die ausgebildet sind zum automatischen oder zumindest teilweise manuellen Dosieren einer Pulverportion (11) aus dem Pulvervorrat (4) durch Verstellen des gesamten Pulvervorrates (4) mit der oder relativ zu der Kartusche (3) und Abtrennen der Pulverportion (11) von dem Pulvervorrat (4), eine Heizeinrichtung zum Erhitzen mindestens einer trinkbaren Flüssigkeit, eine eine Brüheinheit umfassende Zubereitungseinrichtung (16), die ausgebildet ist zum Zubereiten des Kaffees unter Verwendung der Pulverportion (11) und der erhitzten Flüssigkeit, sowie Verschlussmittel (9) zum Verschließen der Kartusche (3), insbesondere im Bereich einer Kartuschen-Auslassöffnung (5),
**dadurch gekennzeichnet,**
**dass** die Dosiermittel (10) einen in die Kartusche (3) einfahrbahren oder die Kartusche (3) verschiebenden, oder einen Kartuschenabschnitt deformierenden, automatisch antreibbaren Druckstempel (6) umfassen.

11. Vorrichtung nach Anspruch 10,
**dadurch gekennzeichnet,**
**dass** die Dosiermittel (10) derart ausgebildet sind, dass mit diesen ein den Pulvervorrat (4) umschließendes Kartuschenvolumen, vorzugsweise durch und/oder bei der Dosierung der Pulverportion (11), derart veränderbar ist, dass das Kartuschenvolumen nach der Entnahme der Pulverportion (4), zumindest näherungsweise, dem in der Kartusche (3) verbleibenden, um die entnommene Pulverportion (4) reduzierten Pulvervorrat (11) entspricht.

12. Vorrichtung nach einem der Ansprüche 10 und 11,
**dadurch gekennzeichnet,**
**dass** die Dosiermittel (10) Schermittel (15), insbesondere einen Schieber mit Aussparung (12) oder ein Messer, umfassen, mit denen die zu dosierende Pulverportion (11) vorzugsweise durch Druckbeaufschlagung, von dem Pulvervorrat (4) abtrennbar ist, gegebenenfalls zusammen mit einem Kartuschenabschnitt.

13. Vorrichtung nach einem der Ansprüche 10 bis 12,
**dadurch gekennzeichnet,**
**dass**, vorzugsweise von Schermitteln (15) gebildete, Transportmittel (14) vorgesehen ist, mit denen eine aus der Kartusche (3) dosierte Pulverportion (11) in Richtung, insbesondere zu der Zubereitungseinrichtung (16) transportierbar ist.

14. Vorrichtung nach einem der Ansprüche 10 bis 13,
**dadurch gekennzeichnet,**
**dass**, vorzugsweise von den Schermitteln (15) und/oder den Transportmitteln (14) gebildete, Verschlussmittel (9) zum Verschließen der Kartusche (3), insbesondere nach dem Dosieren der Pulverportion, vorgesehen sind.

15. Verwendung einer, mit einem mehrere Pulverportionen umfassenden, vorzugsweise verpressten, Pulvervorrat aus gemahlenen Kaffeebohnen vorgefüllten Kartusche mit einer Vorrichtung nach einem der Ansprüche 10 bis 14.

## Claims

1. A method for automatically producing a coffee preparation by means of a coffee preparation device (1), which comprises a brewing unit, comprising the following steps:
- inserting a cartridge (3), which is prefilled with a powder supply (4) of ground coffee beans, which is preferably compressed and which comprises a plurality of powder portions (11), into a cartridge accommodation (2) of a preparation device (1),
- automatically or at least partially manual metering of a powder portion (11) from the powder supply (4), wherein the entire powder supply (4) is displaced for this purpose, preferably axially displaced, with the help of metering means (10), and the powder portion (11) is then separated from the powder supply (4),
- transferring the powder potion (11) to a brewing unit of a preparation mechanism (16),
- automatic preparation of the coffee in the brewing unit using the powder portion (11) and a heated, drinkable liquid, which flows through the powder portion in the brewing unit, in particular under pressure,
- sealing the cartridge (3) in the area of an outlet opening (5) of the cartridge in the preparation device,
**characterized in**
**that** the metering means (10) comprise an automatically drivable compression die (6), which is moved for metering the powder portion in the cartridge (3) and which thereby presses either directly on the powder supply (4) or preferably directly on a deformable or displaceable cartridge section, or which displaces the entire cartridge (3).

2. The method according to claim 1,
**characterized in**
**that** the cartridge (3) is sealed automatically or manually with the help of sealing means (9) after removing the powder portion (11), preferably until the removal of a further powder portion (11).

3. The method according to one of the preceding claims,
**characterized in**
**that** a capsule volume, which surrounds the powder supply (4), is preferably changed by and/or in response to the metering of the powder portion (11) such that the capsule volume, after removing the powder portion (11), at least approximately corresponds to the powder supply (4), which remains in the capsule, reduced by the removed powder portion (11).

4. The method according to one of the preceding claims,
**characterized in**
**that** the powder portions (11) are separated in one piece from the powder supply (4) and/or are transferred to the preparation mechanism (16).

5. The method according to one of the preceding claims,
**characterized in**
**that** the metering means (3) comprise shearing means (15), in particular a blade, by means of which the powder portion (11), which is to be metered, is separated from the powder supply (4) by applying pressure, in particular together with a cartridge section.

6. The method according to claim 5,
**characterized in**
**that** the powder portion (4) is supplied to the preparation mechanism (16) together with the cartridge section.

7. The method according to one of the preceding claims,
**characterized in**
**that** the cartridge (3) is sealed by means of the shearing means (15) or by means of a sealing part, which is operatively connected to the shearing means (15), in particular in a mechanically coupled manner, or by means of sealing means (9), which are separate therefrom.

8. The method according to one of the preceding claims,
**characterized in**
**that** an aroma seal is removed manually or automatically prior to the removal of a first powder portion (11).

9. The method according to one of the preceding claims,
**characterized in**
**that** at least one further powder portion (11) from the same powder supply (4) is metered in the preparation device (1) and is processed in the preparation mechanism (16) for food preparation.

10. A coffee preparation device (1) for the preferably automated production of a coffee, preferably for carrying out a method according to one of the preceding claims, comprising a cartridge accommodation (2) for a cartridge (3), which is prefilled with a powder supply (4) of ground coffee beans, which is preferably compressed and which comprises a plurality of powder portions (11), metering means (10), which are embodied for automatically or at least partially manually metering a powder portion (11) from the powder supply (4) by displacing the entire powder supply (4) with the or relative to the cartridge (3) and separating the powder portion (11) from the powder supply (4), a heating device for heating at least one drinkable liquid, a preparation mechanism (16), which comprises a brewing unit and which is embodied for preparing the coffee using the powder portion (11) and the heated liquid, as well as sealing means (9) for sealing the cartridge (3), in particular in the area of a cartridge outlet opening (5),
**characterized in**
**that** the metering means (10) comprise an automatically drivable compression die (6), which can be inserted into the cartridge (3) or which displaces the cartridge (3) or which deforms a cartridge section.

11. The device according to claim 10,
**characterized in**
**that** the metering means (10) are embodied such that a cartridge volume, which surrounds the powder supply (4), can preferably be changed by means of and/or in response to the metering of the powder portion (11) such that, after removing the powder portion (4), the cartridge volume corresponds at least approximately to the powder portion (11), which remains in the cartridge (3), reduced by the removed powder portion (4).

12. The device according to one of claims 10 and 11,
**characterized in**
**that** the metering means (10) comprise shearing means (15), in particular a slide comprising a recess (12) or a blade, by means of which the powder portion (11), which is to be metered, can be separated from the powder supply (4), preferably by applying pressure, if applicable together with a cartridge section.

13. The device according to one of claims 10 to 12,
**characterized in**
**that** provision is made for transport means (14), which are preferably formed by shearing means (15), by means of which a powder portion (11), which is metered from the cartridge (3), can be transported in the direction of, in particular to the preparation mechanism (16).

14. The device according to one of claims 10 to 13,
**characterized in**
**that** sealing means (9), which are preferably formed by the shearing means (15) and/or the transport means (14), are provided for sealing the cartridge (3), in particular after metering the powder portion.

15. A use of a cartridge, which is prefilled with a powder supply of ground coffee beans, which comprises a plurality of powder portions and which is preferably compressed, comprising a device according to one of claims 10 to 14.

## Revendications

1. Procédé destiné à la production automatisée d'une préparation à base de café avec un dispositif de préparation de café (1) comprenant une unité d'infusion, comprenant les étapes suivantes :
- insertion d'une cartouche (3) pré-remplie d'une réserve de poudre (4) de préférence comprimée de grains de café moulus, comprenant de préférence plusieurs portions de poudre (11) dans un logement pour cartouche (2) d'un dispositif de préparation (1),
- dosage automatique ou au moins en partie manuel d'une portion de poudre (11) provenant de la réserve de poudre (4), alors qu'à cet effet, l'ensemble de la réserve de poudre (4) est déplacé, de préférence déplacé en direction axiale à l'aide de moyens de dosage (10) et la portion de poudre (11) est alors sectionnée de la réserve de poudre (4),
- transfert de la portion de poudre (11) vers une unité d'infusion d'un système de préparation (16),
- préparation automatique du café dans l'unité d'infusion en utilisant la portion de poudre (11) et un liquide potable chauffé qui traverse la portion de poudre dans l'unité d'infusion, notamment sous pression,
- fermeture de la cartouche (3) dans la zone d'un orifice de sortie (5) de la cartouche dans le dispositif de préparation, **caractérisé en ce que** les moyens de dosage (10) comprennent un poinçon (6) pouvant être entraîné automatiquement qui se déplace pour doser la portion de poudre dans la cartouche (3) soit en appliquant une pression directement sur la réserve de poudre (4) ou de préférence directement sur une partie de cartouche déformable ou déplaçable soit en déplaçant l'ensemble de la cartouche (3).

2. Procédé selon la revendication 1, **caractérisé en ce qu'**après le prélèvement de la portion de poudre (11), de préférence jusqu'au prélèvement d'une portion de poudre (11) suivante, la cartouche (3) est refermée de manière automatique ou manuelle à l'aide de moyens de fermeture (9).

3. Procédé selon l'une quelconque des revendications précédentes, **caractérisé en ce qu'**un volume de capsule entourant la réserve de poudre (4) varie de préférence du fait et/ou lors du dosage de la portion de poudre (11), de sorte que le volume de capsule après le prélèvement de la portion de poudre (11) corresponde au moins approximativement à la réserve de poudre (4) restant dans la capsule, réduite de la portion de poudre (11) retirée.

4. Procédé selon l'une quelconque des revendications précédentes, **caractérisé en ce que** la portion de poudre (11) est sectionnée de la réserve de poudre (4) et/ou transférée vers le système de préparation (16) en un morceau.

5. Procédé selon l'une quelconque des revendications précédentes, **caractérisé en ce que** les moyens de dosage (10) comprennent des moyens de cisaillement (15), notamment une lame, à l'aide desquelles la portion de poudre (11) à doser est sectionnée par application de pression de la réserve de poudre (4), notamment ensemble avec une partie de cartouche.

6. Procédé selon la revendication 5, **caractérisé en ce que** la portion de poudre (4) est amenée vers le système de préparation (16) ensemble avec la partie de cartouche.

7. Procédé selon l'une quelconque des revendications précédentes, **caractérisé en ce qu'**on ferme la cartouche (3) avec les moyens de cisaillement (15) ou avec une pièce de fermeture en interaction, notamment mécaniquement accouplée avec les moyens de cisaillement (15) ou avec des moyens de fermeture (9) séparés de ceux-ci.

8. Procédé selon l'une quelconque des revendications précédentes, **caractérisé en ce qu'**avant le prélèvement d'une première portion de poudre (11), une fermeture d'arôme est retirée de manière manuelle ou automatique.

9. Procédé selon l'une quelconque des revendications précédentes, **caractérisé en ce que** dans le dispositif de préparation (1), au moins une portion de poudre (11) supplémentaire est dosée à partir de la même réserve de poudre (4) et mise en oeuvre dans le système de préparation (16) afin de réaliser la préparation alimentaire.

10. Dispositif de préparation de café (1) pour la préparation, de préférence automatisée d'un café, de préférence pour la réalisation d'un procédé selon l'une quelconque des revendications précédentes, comprenant un logement pour cartouche (2) pour une cartouche (3) pré-remplie d'une réserve de poudre (4) de préférence comprimée de grains de café moulus, comprenant plusieurs portions de poudre (11), des moyens de dosage (10) qui sont conçus pour le dosage automatique ou au moins en partie manuel d'une portion de poudre (11) à partir de la réserve de poudre (4) par déplacement de l'ensemble de la réserve de poudre (4) avec ou par rapport à la cartouche (3) et sectionnement de la portion de poudre (11) de la réserve de poudre (4), un système de chauffage pour chauffer au moins un liquide potable, un système de préparation (16) comprenant une unité d'infusion, qui est conçue pour préparer le café en utilisant la portion de poudre (11) et le liquide chauffé, ainsi que des moyens de fermeture (9) pour fermer la cartouche (3), notamment dans la zone d'un orifice de sortie (5) des cartouches, **caractérisé en ce que** les moyens de dosage (10) comportent un poinçon (6) entraînable automatiquement qui peut s'introduire dans la cartouche (3) ou qui déplace la cartouche (3) ou qui déforme une partie de cartouche.

11. Dispositif selon la revendication 10, **caractérisé en ce que** les moyens de dosage (10) sont conçus de telle sorte qu'avec leur aide, un volume de cartouche entourant la réserve de poudre (4) soit variable de préférence du fait et/ou lors du dosage de la portion de poudre (11) de telle sorte qu'après le retrait de la portion de poudre (4), le volume de cartouche corresponde au moins approximativement à la réserve de poudre (11) restant dans la cartouche (3), réduite de la portion de poudre (4) prélevée.

12. Dispositif selon l'une quelconque des revendications 10 et 11, **caractérisé en ce que** les moyens de dosage (10) comprennent des moyens de cisaillement (15), notamment un coulisseau avec un évidement (12) ou une lame, à l'aide desquels la portion de poudre (11) à doser est sectionnable de la réserve de poudre (4), de préférence par application d'une pression, le cas échéant ensemble avec une partie de cartouche.

13. Dispositif selon l'une quelconque des revendications 10 à 12, **caractérisé en ce que** sont prévus des moyens de transport (14) formés de préférence de moyens de cisaillement (15), à l'aide desquels une portion de poudre (11) dosée à partir de la cartouche (3) est transportable en direction de, notamment vers le système de préparation (16).

14. Dispositif selon l'une quelconque des revendications 10 à 13, **caractérisé en ce que** des moyens de fermeture (9) formés de préférences par les moyens de cisaillement (15) et/ ou par les moyens de transport (14) sont prévus pour fermer la cartouche (3), notamment après le dosage de la portion de poudre.

15. Utilisation d'une cartouche pré-remplie avec une réserve de poudre de préférence comprimée de grains de café moulus comprenant plusieurs portions de poudre avec un dispositif selon l'une quelconque des revendications 10 à 14.
